# DEMANDE DE BREVET EUROPEEN

(11) **EP 0 867 623 A1**
(43) Date de publication de la demande: **30.09.1998**
(21) Numéro de dépôt: 98400529.8
(22) Date de dépôt: 06.03.1998
(51) Int. Cl.: F16B 13/12

(54) **Cheville de fixation de vis ou analogue dans un matériau friable**

(30) Priorité: 27.03.1997 FR 9704248
(71) Demandeur: Es, Willy, 45740 Lailly-en-Val (FR)
(72) Inventeur: Es, Willy, 45740 Lailly-en-Val (FR)
(74) Mandataire: Flavenot, Bernard

(57) **Abrégé**

La présente invention concerne les chevilles de fixation pour vis ou analogue dans un matériau friable ou analogue.

La cheville selon l'invention comporte un corps plat 10, une percée 11 réalisée dans le corps et débouchant, aux deux extrémités 12, 13 du corps, par des ouvertures 14, 15, des moyens de pas-de-vis 16 associés à la percée 11, un épaulement 18 solidaire de l'extrémité 12 du corps, au moins une patte 21, 22 située, dans une position initiale, sensiblement dans le plan du corps plat 10, des moyens 23 pour monter la patte en rotation à l'extrémité 13 du corps sur un côté de la seconde ouverture 15, une butée 24, 25 solidaire de la patte 21, 22, la butée ayant au moins une portion de sa surface située dans la percée traversante 11 et au moins partiellement en regard de l'ouverture 15, au moins une lamelle oblongue 30, 34 solidaire du corps 10 et située sensiblement dans le plan du corps, la lamelle entourant au moins partiellement la patte, la distance séparant la seconde ouverture 15 et l'extrémité 31 de la lamelle étant supérieure à la distance séparant l'ouverture 15 et l'extrémité 32 de la patte.

## Description

La présente invention concerne les chevilles de fixation pour vis ou analogue dans un matériau friable ou analogue, par exemple dans des carreaux de plâtre.

Dans de nombreux immeubles, les cloisons sont réalisées avec des plaques de plâtre préfabriquées qui sont montées les unes sur les autres. Cette technique est avantageuse pour la réalisation de cloisons intérieures qu'elle permet de mettre en place beaucoup plus rapidement que lorsque les cloisons étaient réalisées par le dépôt de couches de plâtre sur une construction de briques, ce qui réduit considérablement leur coût de revient.

Cette réalisation présente cependant un inconvénient lorsque que l'on veut fixer, sur une telle cloison, un élément quelconque, objet décoratif, petit meuble du type étagère, etc. Pour réaliser de telles fixations, on connaît le principe des chevilles enfichées dans un avant-trou pratiqué dans la cloison. Ces chevilles comportent une percée dans laquelle peut être placée une vis ou analogue. Le vissage de la vis dans la percée déforme la cheville qui s'appuie alors fortement contre la paroi de l'avant-trou, cette déformation permettant de bloquer l'ensemble cheville-vis par rapport à la cloison. Une telle réalisation est notamment décrite dans le Brevet EP-A-0 278 816.

En s'appuyant contre la paroi de l'avant-trou, la cheville devrait théoriquement s'ancrer solidement dans le matériau de la cloison. Mais, dans le cas de cloisons en plaques de plâtre préfabriquées, il est presque impossible d'obtenir un ancrage durable car, le plâtre étant friable, la cheville prend assez rapidement du jeu et se désolidarise de la paroi sur laquelle elle s'appuie. Cette technique s'est ainsi révélée peu fiable pour les fixations dans des cloisons en plaques de plâtre préfabriquées.

Pour palier ces inconvénients le Demandeur a réalisé une cheville de fixation pour vis ou analogue dans un matériau friable ou analogue, qui assure une fixation beaucoup plus fiable que les chevilles de l'art antérieur. Cette cheville comporte notamment un corps une percée traversante réalisée dans le corps et débouchant, aux deux extrémités du corps, par une première et une seconde ouvertures, des moyens de pas-de-vis tapissant au moins partiellement la paroi de la percée, un épaulement solidaire de l'extrémité du corps dans laquelle est réalisée la première ouverture, au moins une patte, des moyens pour monter en rotation la patte à l'autre extrémité du corps sur un côté de la seconde ouverture, et une première butée solidaire de la première patte, la butée ayant au moins une portion de sa surface dans l'axe de la percée et au moins partiellement en regard de la seconde ouverture.

Bien que cette cheville donne déjà d'excellents résultats, le Demandeur, c'est le but de la présente invention, l'a perfectionnée afin de rendre encore plus fiable son implantation dans les matériaux friables et d'en faciliter sa réalisation industrielle.

Plus précisément, la présente invention a pour objet une cheville de fixation pour vis ou analogue apte à être implantée dans un matériau friable ou analogue, ladite cheville étant sensiblement d'une forme oblongue définie suivant une direction donnée, comportant:
un corps sensiblement plat défini sensiblement dans un plan contenant ladite direction donnée,
une percée traversante réalisée dans le corps, l'axe de cette percée étant sensiblement confondu avec ladite direction donnée, la percée débouchant, aux deux extrémités du corps, par une première et une seconde ouvertures,
des moyens de pas-de-vis associés au moins partiellement à la paroi de ladite percée,
un épaulement solidaire de l'extrémité du corps dans laquelle est réalisée la première ouverture,
au moins une patte située, dans une position initiale, sensiblement dans le plan du corps plat,
des moyens pour monter la patte en rotation à l'autre extrémité du corps sur un côté de la seconde ouverture, et
une butée solidaire de la patte, la butée ayant au moins une portion de sa surface située dans la percée et au moins partiellement en regard de ladite seconde ouverture,
CARACTERISEE PAR LE FAIT qu'elle comporte en outre au moins une lamelle oblongue solidaire du corps et située sensiblement dans le plan du corps, la lamelle entourant au moins partiellement la patte, la distance séparant la seconde ouverture et l'extrémité de ladite lamelle la plus éloignée du corps étant supérieure à la distance séparant ladite seconde ouverture et l'extrémité de ladite patte la plus éloignée du corps.

D'autres caractéristiques et avantages de la présente invention apparaîtront au cours de la description suivante donnée en regard des dessins annexés à titre illustratif, mais nullement limitatif, dans lesquels:
La figure 1 représente une vue de face d'un mode de réalisation d'une cheville de fixation selon l'invention, dans sa forme avant son utilisation,
La figure 2 représente une vue en coupe de la cheville selon la figure 1, cette coupe étant référencée II-II sur la figure 1,
La figure 3 représente une vue en coupe de la cheville de fixation selon la réalisation illustrée sur les figures 1 et 2, lorsqu'elle est implantée dans un matériau friable, et
La figure 4 représente une étape d'un mode de réalisation préférentiel de la cheville de fixation selon l'invention, précédant celle au cours de laquelle lui est donnée sa forme définitive illustrée sur les figures 1 et 2.

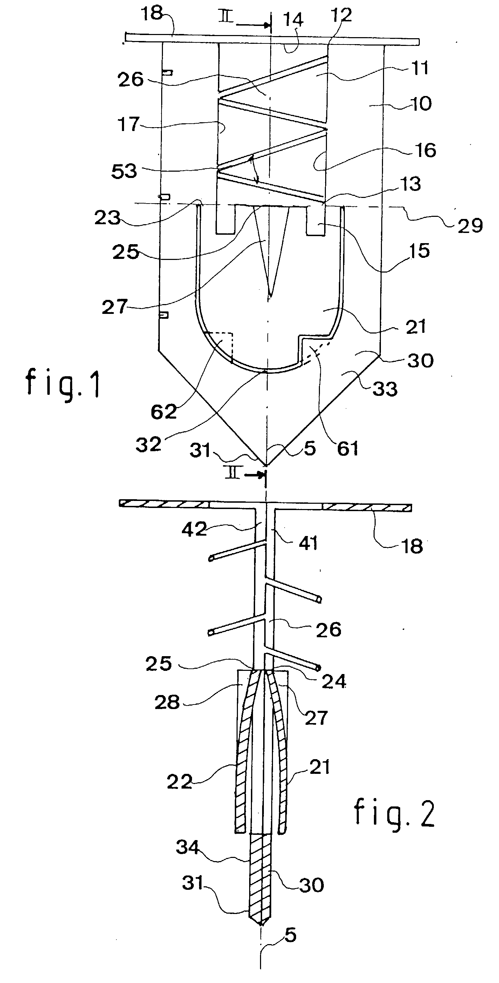

Les figures 1 à 4 représentant un même mode de réalisation d'une cheville de fixation selon l'invention, les mêmes références y désignent les mêmes éléments quelle que soit la figure sur laquelle elles apparaissent et quelle que soit la forme de représentation de ces éléments.

Le Demandeur tient à préciser que ces figures représentent un seul mode de réalisation de l'objet selon l'invention, mais qu'il peut exister d'autres modes de réalisation qui répondent à la définition de cette invention.

Il précise en outre que, lorsque, selon la définition de l'invention, l'objet de l'invention comporte "au moins un" élément ayant une fonction donnée, le mode de réalisation décrit peut comporter plusieurs de ces éléments.

Il précise aussi que, si le mode de réalisation de l'objet selon l'invention tel qu'illustré comporte plusieurs éléments de fonction identique et si, dans la description, il n'est pas spécifié que l'objet selon cette invention doit obligatoirement comporter un nombre particulier de ces éléments, l'objet de l'invention pourra être défini comme comportant "au moins un" de ces éléments.

La cheville 1 est particulièrement avantageuse pour la fixation d'un élément quelconque 2, comme une vis ou analogue, dans un matériau friable ou analogue 100, par exemple un carreau de plâtre.

Il est tout d'abord précisé que cette cheville est d'une forme générale oblongue définie suivant une direction donnée référencée 5 sur les figures et que cette direction sera en fait la direction suivant laquelle sera implantée la cheville.

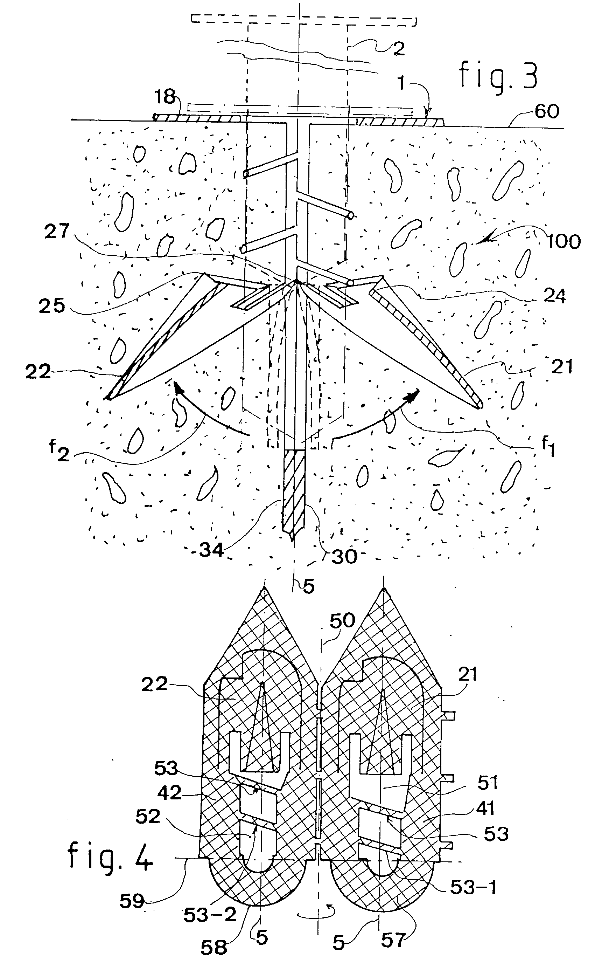

La cheville 1 comporte un corps 10 et une percée traversante 11 réalisée dans ce corps suivant un axe 26 sensiblement confondu avec la direction donnée 5. La percée traversante débouche aux deux extrémités 12, 13 du corps, par une première ouverture 14 et une seconde ouverture 15. Des moyens de pas-de-vis 16 sont réalisés, ou aptes à être réalisés, en coopération avec la paroi 17 de la percée de façon qu'une vis 2 puisse être vissée dans la paroi de cette percée traversante (figure 3).

Un épaulement 18 est solidaire d'une première extrémité du corps 10, par exemple l'extrémité 12 dans laquelle est réalisée la première ouverture 14.

La cheville comporte en outre au moins une patte 21, 22, et avantageusement deux comme représenté sur les figures, des moyens 23 pour monter les pattes 21, 22 en rotation par rapport au corps 10 en sa seconde extrémité 13, sensiblement autour d'une droite 29 sensiblement perpendiculaire à la direction donnée 5 et respectivement d'un côté et de l'autre de la seconde ouverture 15, comme illustré sur la figure 3.

La cheville 1 comporte aussi deux butées 24, 25, chaque butée étant solidaire d'une patte 21, 22 et ayant au moins une portion de sa surface située dans la percée traversante 11 et au moins partiellement en regard de la seconde ouverture 15 de façon que, lorsqu'elle avance en se vissant dans la paroi de la percée traversante, la vis 2 puisse appuyer sur ces butées 24, 25.

Chaque patte 21, 22 comporte avantageusement au moins un renfort longitudinal 27, 28 qui augmente sa rigidité sans empêcher sa rotation autour de la droite 29.

Comme mentionné ci-avant, la cheville comporte des moyens 23 pour monter les pattes 21, 22 en rotation par rapport au corps 10. Ces moyens peuvent être de tout type mais, dans le cas où la cheville 1 est réalisée à partir d'une seule bande d'un matériau relativement solide comme décrit ci-après en regard de la figure 4, ils peuvent être avantageusement constitués par au moins un point de faiblesse relative réalisé dans le matériau donné. Ces moyens 23 sont connus en eux-mêmes et ne seront donc pas décrits plus amplement ici, dans l'unique souci de simplifier la présente description.

Selon une caractéristique de la présente invention, la cheville comporte en outre au moins une lamelle oblongue 30 solidaire du corps 10 et située sensiblement dans le plan du corps. La lamelle entoure au moins partiellement la patte 21, 22 et la distance séparant la seconde ouverture 15 et l'extrémité 31 de la lamelle 30 la plus éloignée du corps 10 est supérieure à la distance séparant cette même seconde ouverture 15 et l'extrémité 32 de la patte la plus éloignée du corps 10 qui est entourée par cette lamelle 30.

En outre, de façon préférentielle, pour favoriser la pénétration de la cheville dans le matériau friable, par exemple un carreau de plâtre, l'extrémité 31 de la lamelle 30 la plus éloignée du corps 10 est conformée en biseau et ce biseau est avantageusement coupant. De plus, pour que la cheville pénètre dans le matériau suivant une direction déterminée et ne dévie pas de sa trajectoire lors de son implantation, le biseau coupant affecte sensiblement la forme d'un "V" comme illustré sur les figures jointes.

Dans une réalisation particulièrement avantageuse, comme celle illustrée sur les figures, le corps 10 de la cheville est formé à partir de deux bandes 41, 42 qui sont plaquées l'une sur l'autre. Cette réalisation permet de réaliser une cheville qui comporte avantageusement deux pattes 21, 22 et deux lamelles 30, 34 respectivement solidaires des deux bandes 41, 42. Cette réalisation confère à la cheville, notamment, une bonne rigidité pour un minimum d'encombrement et un équilibre dynamique qui permet d'effectuer de façon parfaite son implantation dans un matériau comme du plâtre ou analogue.

En effet, il est alors possible de réaliser les deux bandes 41, 42, les deux pattes 21, 22 et les deux lamelles 30 et 34 à partir d'une même feuille de matériau comme de l'acier ou analogue. La figure 4 représente une telle feuille après qu'elle ait été emboutie, mais avant qu'elle soit repliée autour de la droite 50 qui est parallèle à la direction donnée 5. Cette figure représente la feuille à plat et fait bien apparaître les deux bandes 41, 42, les deux pattes 21, 22 et les deux lamelles 30, 34.

A partir de cette forme selon la représentation de la figure 4, la feuille de matériau emboutie est pliée suivant la droite 50 pour donner à la cheville la structure telle que représentée sur les figures 1 à 3. La percée traversante 11 est obtenue par la superposition, lors du pliage de la feuille emboutie, de deux découpes 51, 52 réalisées respectivement dans chacune des deux bandes 41, 42.

Comme mentionné ci-avant, la cheville comporte un épaulement 18 solidaire de la première extrémité 12 du corps 10. Dans le cas du mode de réalisation de la cheville décrit ci-dessus, cet épaulement est obtenu par le pliage des deux embouts 57, 58 autour d'une droite 59 perpendiculaire à la droite de pliage 50 définie ci-avant. Ces deux embouts sont pliés du même côté du plan de la feuille pour que, lors de la superposition des deux bandes 41, 42, ils se trouvent dans un même plan perpendiculaire à la direction donnée 5 et forment l'épaulement 18 défini ci-avant, comme parfaitement visible sur les figures 1 à 3.

Comme dans les chevilles de l'art antérieur, la cheville 1 comporte des moyens de pas-de-vis 16 associés à la paroi 17 de la percée traversante 11. Cependant, la structure de la cheville selon l'invention permet de réaliser ces moyens de pas-de-vis 16 d'une façon très avantageuse et permet en outre, à ces moyens de pas-de-vis, de renforcer la structure de la cheville quand elle est implantée et qu'une vis 2 lui est associée.

Selon une caractéristique de l'invention, ces moyens de pas-de-vis 16 comportent essentiellement des entretoises 53 définies sensiblement sur l'hélice du pas-de-vis.

Dans le mode de réalisation de la cheville décrit ci-avant à partir d'une feuille de matériau comme de l'acier ou analogue, la cheville peut comporter deux groupes d'entretoises 53-1 et 53-2 respectivement réalisés dans la feuille de matériau lors de la réalisation des deux bandes 41, 42 de façon que les entretoises d'un groupe réalisé dans une bande passent à travers la découpe 51, 52 réalisée dans l'autre bande lors du pliage de la feuille emboutie, comme cela apparaît sur la figure 2 qui représente la coupe d'un mode de réalisation préférentiel de la cheville 1.

Dans le mode de réalisation illustré de la cheville 1, les deux lamelles 30 et 34 sont parfaitement superposées et leurs deux extrémités 31 sont au même niveau. Cependant, afin de favoriser encore plus l'implantation de la cheville, il peut être avantageux que la distance séparant la seconde ouverture 15 et l'extrémité 31 de l'une des deux lamelles 30, 34, qui est la plus éloignée du corps 10, soit supérieure à la distance correspondante pour l'autre lamelle, de façon que les deux extrémités 31 soient décallées l'une par rapport à l'autre dans le plan des deux lamelles et sensiblement sur la direction donnée 5. De cette façon, elles pénètrent dans le matériau friable l'une après l'autre, ce qui favorise l'introduction des deux lamelles 30 et 34 dans le matériau.

Comme dans le cas des chevilles similaires de l'art antérieur, après l'implantation de la cheville dans le matériau, une vis 2 est introduite dans la percée 11. Elle vient au contact des butées 24, 25 et appuie sur les deux pattes qui subissent chacune une rotation illustrée par les flèches f₁ et f₂ sur la figure 3. Pour que la rotation de chaque patte s'effectue dans le sens souhaité défini par ces deux flèches f1 et f2, c'est-à-dire dans le sens dans lequel aucune des deux pattes ne soit traversée par la direction donnée 5, la cheville comporte en outre des moyens 61, 62 pour orienter le sens de rotation des deux pattes.

Dans un mode de réalisation avantageux, ces moyens 61, 62 sont réalisés, comme illustré sur les figures, par le fait que les deux pattes ne sont pas symétriques l'une de l'autre par rapport au plan général du corps 10 quand les deux bandes 41 et 42 sont accolées, figures 1 et 2, plus précisément par le fait qu'une partie de la patte solidaire d'une bande vient buter contre une partie de la lamelle qui est solidaire de l'autre bande, et qu'il en est de même pour l'autre patte.

La cheville selon l'invention décrite ci-avant s'utilise et fonctionne de la façon suivante:

Avant son utilisation, la cheville se présente comme illustré sur les figures 1 et 2. Lorsqu'on veut l'implanter dans un matériau friable, par exemple un carreau de plâtre ou analogue, on place les extrémités 31 des lamelles 30, 34 contre la surface du carreau de plâtre et, au moyen par exemple d'un marteau, on enfonce la cheville dans le plâtre en tapant sur l'épaulement 18. La forme de biseau en "V" coupant donnée aux extrémités des lamelles 30, 34 permet aux lamelles de pénétrer aisément dans le matériau friable, puis aux pattes 21, 22 et enfin au corps 10 qui suivent la découpe préalable réalisée par les lamelles, jusqu'à ce que l'épaulement 18 bute contre la surface extérieure 60 du carreau de plâtre (figure 3).

Quand l'épaulement 18 est en butée contre la surface 60, la vis 2 peut être vissée dans la percée traversante 11 en s'appuyant notamment sur les entretoises 53, jusqu'à ce qu'elle arrive contre les butées 24, 25. En continuant le vissage de la vis, on l'oblige à s'enfoncer entre les deux pattes en appuyant sur les deux butées, ce qui a pour effet d'entraîner les deux pattes 21, 22 respectivement dans leur rotation f1 et f2 comme illustré sur la figure 3.

Lorsque les deux pattes ont atteint la position comme celle illustrée sur la figure 3, elles assurent un bon ancrage de la cheville dans le matériau friable.

La figure 3 n'illustre qu'un mode d'utilisation de la cheville 1 selon l'invention. Il est cependant bien évident qu'une telle cheville donne encore de meilleurs résultats quand elle est implantée, par exemple, dans un carreau de plâtre ou analogue dont l'épaisseur est inférieure à la longueur du corps 10. Dans ce cas, après des rotations f₁ et f₂ chacune d'un angle supérieur à quatre-vingt-dix degrés, les deux pattes 21, 22 viennent s'appuyer sur la face du carreau qui est opposée à celle 60 contre laquelle vient buter l'épaulement 18.

La description précédente met en évidence les avantages conférés par la structure de la cheville selon l'invention. Notamment dans le cas où elle est réalisée comme décrit ci-dessus, sa fabrication industrielle peut être entièrement automatisée et son prix de revient est très faible. Quant à sa mise en place dans le matériau friable, elle ne nécessite pas, comme pour les chevilles de l'art antérieur, la réalisation d'un orifice préalable.

## Revendications

1. Cheville de fixation (1) pour vis ou analogue (2) apte à être implantée dans un matériau friable ou analogue (100), ladite cheville étant sensiblement d'une forme oblongue définie suivant une direction donnée (5), comportant:
un corps (10) sensiblement plat défini sensiblement dans un plan contenant ladite direction donnée,
une percée traversante (11) réalisée dans le corps, l'axe (26) de cette percée étant sensiblement confondu avec ladite direction donnée (5), la percée débouchant, aux deux extrémités (12, 13) du corps, par une première et une seconde ouvertures (14, 15),
des moyens de pas-de-vis (16) associés au moins partiellement à la paroi (17) de ladite percée traversante,
un épaulement (18) solidaire de l'extrémité (12) du corps dans laquelle est réalisée la première ouverture (14),
au moins une patte (21, 22) située, dans une position initiale, sensiblement dans le plan du corps plat (10),
des moyens (23) pour monter la patte en rotation à l'autre extrémité (13) du corps sur un côté de la seconde ouverture (15), et
une butée (24, 25) solidaire de la patte (21, 22), la butée ayant au moins une portion de sa surface située dans la percée traversante (11) et au moins partiellement en regard de ladite seconde ouverture (15),
CARACTERISEE PAR LE FAIT qu'elle comporte en outre au moins une lamelle oblongue (30, 34) solidaire du corps (10) et située sensiblement dans le plan du corps, la lamelle entourant au moins partiellement la patte, la distance séparant la seconde ouverture (15) et l'extrémité (31) de ladite lamelle la plus éloignée du corps étant supérieure à la distance séparant ladite seconde ouverture (15) et l'extrémité (32) de ladite patte la plus éloignée du corps.

2. Cheville selon la revendication 1, caractérisée par le fait que l'extrémité (31) de la lamelle (30, 34) la plus éloignée du corps (10) est conformée en biseau.

3. Cheville selon la revendication 2, caractérisée par le fait que le biseau est coupant.

4. Cheville selon la revendication 3, caractérisée par le fait que le biseau coupant est sensiblement en forme de "V"

5. Cheville selon l'une des revendications 1 à 4, caractérisée par le fait que le corps (10) est formé de deux bandes (41, 42) plaquées l'une sur l'autre.

6. Cheville selon la revendication 5, caractérisée par le fait qu'elle comporte deux pattes (21, 22) et deux lamelles (30, 34) respectivement solidaires des deux bandes (41, 42).

7. Cheville selon. la revendication 6, caractérisée par le fait que les deux bandes, les deux pattes et les deux lamelles sont réalisées à partir d'une même feuille de matériau.

8. Cheville selon la revendication 7, caractérisée par le fait que les deux bandes, les deux pattes et les deux lamelles sont réalisées par emboutissage dans la même feuille de matériau, ladite feuille de matériau emboutie étant ensuite pliée suivant une droite (50) parallèle à la direction donnée (5), la percée traversante (11) étant obtenue par une découpe (51, 52) réalisée dans chacune des deux bandes (41, 42), les deux découpes se superposant lors du pliage de la feuille emboutie.

9. Cheville selon l'une des revendications 1 à 8, caractérisée par le fait que les moyens de pas-de-vis (16) associés à la paroi (17) de la percée traversante (11) comportent des entretoises (53) définies sensiblement sur l'hélice du pas-de-vis.

10. Cheville selon les revendications 8 et 9, caractérisée par le fait qu'elle comporte deux groupes d'entretoises (53-1, 53-2) , les deux groupes d'entretoises étant respectivement réalisés dans la feuille de matériau lors de la réalisation des deux bandes (41, 42), les entretoises d'un groupe réalisé dans une bande passant à travers la découpe réalisée dans l'autre bande.

11. Cheville selon l'une des revendications 6 à 10, caractérisée par le fait que la distance séparant la seconde ouverture (15) et l'extrémité (31), de l'une des deux lamelles, qui est la plus éloignée du corps est supérieure à la distance correspondante pour l'autre lamelle.

12. Cheville selon l'une des revendications 6 à 11, caractérisée par le fait qu'elle comporte en outre des moyens (61, 62) pour orienter le sens de rotation des deux pattes (21, 22).
